# EUROPEAN PATENT APPLICATION

(11) **EP 4 357 307 A1**
(43) Date of publication of application: **24.04.2024**
(21) Application number: 22824965.2
(22) Date of filing: 13.06.2022
(51) Int. Cl.: C03B 33/09, C03C 21/00, B23K 26/382

(54) **METHOD FOR PRODUCING PLATE-SHAPED MEMBER AND PLATE-SHAPED MEMBER**

(30) Priority: 16.06.2021 JP 2021100357
(71) Applicant: AGC Inc., Chiyoda-ku Tokyo 100-8405 (JP)
(72) Inventor: IIDA, Ryoichi, Tokyo 100-8405 (JP); FUJIWARA, Takuma, Tokyo 100-8405 (JP); SHIBATA, Akihiro, Tokyo 100-8405 (JP); ONO, Takeaki, Tokyo 100-8405 (JP); SAITO, Isao, Tokyo 100-8405 (JP)
(74) Representative: Müller-Boré & Partner Patentanwälte PartG mbB
(86) International application number: PCT/JP2022/023684
(87) International publication number: WO 2022/264976

(57) **Abstract**

The present invention relates to a method for producing a plate-shaped member, the method involving a step for irradiating a surface (10A) of a base material (10) with laser light along a first trajectory (T1) with a curvature radius of 100 mm or more to form a plurality of openings (H1), a step for irradiating the surface (10A) with laser light along a second trajectory (T2) with a curvature radius of less than100 mm to form a plurality of openings (H2), and a step for cutting a plate-shaped member from the base material (10) with the openings (H1), (H2) as starting points, wherein the second trajectory (T2) is continued from the first trajectory (T1), and irradiation pitches (P2) on the first trajectory (T1) and second trajectory (T2) fall within a predetermined range.

## Description

### TECHNICAL FIELD

The present invention relates to a method for producing a plate-shaped member and a plate-shaped member.

### BACKGROUND ART

A method for cutting out a plate-shaped member from a base material by irradiating the base material with laser light to form a plurality of openings and fracturing the base material along the plurality of openings is known. For example, Patent Literature 1 describes that a flat glass member is irradiated with laser light to cut out a glass element from the glass member.

### CITATION LIST

### PATENT LITERATURE

Patent Literature 1: JP2019-511989A

### SUMMARY OF INVENTION

### TECHNICAL PROBLEM

However, a strength of the plate-shaped member may be reduced due to such a reason that cracks occur in the fracture surface separated from the base material along the openings. Therefore, it is required to prevent the occurrence of cracks.

The present invention is made in view of the above problems, and an object thereof is to provide a method for producing a plate-shaped member and a plate-shaped member, capable of preventing the occurrence of cracks.

### SOLUTION TO PROBLEM

In order to solve the above-described problems and achieve the object, a method for producing a plate-shaped member according to the present disclosure includes:
a step of forming a plurality of openings along a first trajectory on a surface of a base material by irradiating the surface of the base material with a pulse-oscillated laser light along the first trajectory, the first trajectory having a curvature radius of 100 mm or more;
a step of forming a plurality of openings along a second trajectory on the surface of the base material by irradiating the surface of the base material with the laser light along the second trajectory, the second trajectory being continuous with the first trajectory and having a curvature radius of less than 100 mm; and
a step of cutting out a plate-shaped member from the base material by fracturing the base material with the openings along the first trajectory and the second trajectory as starting points, in which
an irradiation pitch of the laser light on the first trajectory is 9 µm or less, and an irradiation pitch of the laser light on the second trajectory is smaller than the irradiation pitch of the laser light on the first trajectory.

In order to solve the above-described problems and achieve the object, a plate-shaped member according to the present disclosure is a plate-shaped member having a first end surface having a curvature radius of 100 mm or more when viewed from a thickness direction and a second end surface having a curvature radius of less than 100 mm when viewed from the thickness direction and connected to the first end surface, in which
the first end surface has a plurality of linear damaged portions extending in the thickness direction of the plate-shaped member, formed at a pitch of 9 µm or less, and
the second end surface has a plurality of linear damaged portions extending in the thickness direction of the plate-shaped member, formed at a pitch smaller than the pitch of the damaged portions of the first end surface.

### ADVANTAGEOUS EFFECTS OF INVENTION

According to the present invention, a method for producing a plate-shaped member and a plate-shaped member capable of preventing occurrence of cracks can be provided.

### BRIEF DESCRIPTION OF DRAWINGS

[FIG. 1] FIG. 1 is a schematic cross-sectional view of a base material.
[FIG. 2] FIG. 2 is a schematic diagram illustrating irradiation of laser light along a first trajectory.
[FIG. 3] FIG. 3 is a schematic diagram illustrating irradiation of laser light along a second trajectory.
[FIG. 4] FIG. 4 is a schematic diagram illustrating an example in which openings are formed over the entire section of the trajectory.
[FIG. 5] FIG. 5 is a schematic diagram of a plate-shaped member.
[FIG. 6] FIG. 6 is a flowchart illustrating a flow for producing a plate-shaped member according to the present embodiment.
[FIG. 7] FIG. 7 is a graph illustrating an example of stress distribution in the thickness direction of a plate-shaped member.
[FIG. 8] FIG. 8 is a schematic diagram illustrating an on-vehicle display according to the present embodiment.
[FIG. 9] FIG. 9 is a schematic diagram illustrating a trajectory for cutting out a base material in Examples.
[FIG. 10] FIG. 10 is a schematic diagram illustrating a method for measuring a crack.

### DESCRIPTION OF EMBODIMENTS

Preferred embodiments of the present invention will be described below in detail with reference to the accompanying drawings. The present invention is not limited to these embodiments and also includes a combination of the embodiments when there are a plurality of embodiments. In addition, rounding ranges and common tolerance ranges are included for numerical values.

In the present embodiment, a base material 10 is irradiated with laser light L to form openings H on the base material 10, and the base material 10 is fractured with the openings H as starting points, such that a plate-shaped member 100 is cut out from the base material 10.

Specifically, a method for producing a plate-shaped member according to the present embodiment includes: a step of forming a plurality of openings along a first trajectory on a surface of a base material by irradiating the surface of the base material with a pulse-oscillated laser light along the first trajectory, the first trajectory having a curvature radius of 100 mm or more; a step of forming a plurality of openings along a second trajectory on the surface of the base material by irradiating the surface of the base material with the laser light along the second trajectory, the second trajectory being continuous with the first trajectory and having a curvature radius of less than 100 mm; and a step of cutting out a plate-shaped member from the base material by fracturing the base material with the openings along the first trajectory and the second trajectory as starting points, in which an irradiation pitch of the laser light on the first trajectory is 9 µm or less, and an irradiation pitch of the laser light on the second trajectory is smaller than the irradiation pitch of the laser light on the first trajectory.

The base material 10 and a method for producing the plate-shaped member 100 from the base material 10 will be described below.

### (Base Material)

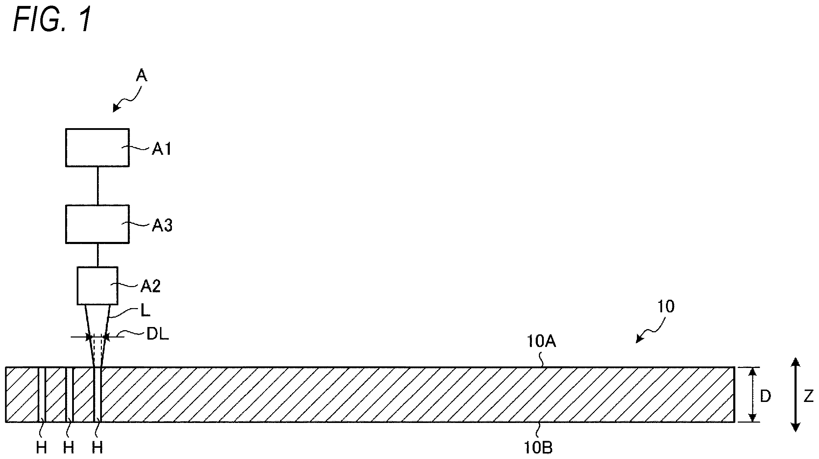

FIG. 1 is a schematic cross-sectional view of a base material. As illustrated in FIG. 1, the base material 10 is a transparent plate-shaped member. The plate shape as used herein is not limited to a flat plate shape and may indicate that a width of a main surface is greater than a thickness, and the term "transparent" as used herein may refer to transmitting visible light. Hereinafter, one main surface of the base material 10 is referred to as a surface 10A, a main surface opposite to the surface 10A is referred to as a surface 10B, a thickness direction of the base material 10, that is, a direction connecting the surface 10B and the surface 10A is referred to as a Z direction.

In the example of FIG. 1, the base material 10 has a rectangular flat plate shape when viewed from the Z direction, and the base material 10 may be of any shape. For example, the base material 10 is not limited to the rectangular shape when viewed from the Z direction and may be of a polygonal shape, a circular shape, an elliptical shape, or the like. In the example of FIG. 1, the base material 10 has a flat plate shape, but is not limited to this, and may have a shape in which a flat plate is curved. That is, the base material 10 may have a curved surface shape in which the surfaces 10A and 10B are convex in the Z direction.

In the case where the surfaces 10A and 10B of the base material 10 are curved and convex in the Z direction, the curvature radius of the surfaces 10A and 10B of the base material 10 is preferably 10,000 mm or less, more preferably 5,000 mm or less, and still more preferably 3,000 mm or less. In the case where the surfaces 10A and 10B of the base material 10 are curved and convex in the Z direction, the curvature radius of the surfaces 10A and 10B of the base material 10 is preferably 10 mm or more, more preferably 50 mm or more, still more preferably 100 mm or more, and particularly preferably 200 mm or more.

The thickness D of the base material 10 is preferably 0.2 mm or more, more preferably 0.8 mm or more, and still more preferably 1 mm or more. The thickness D of the base material 10 is preferably 5 mm or less, more preferably 3 mm or less, and still more preferably 2 mm or less. The thickness D of the base material 10 refers to a length from the surface 10A to the surface 10B in the Z direction. The thickness D within this range makes it possible to appropriately improve rigidity.

The base material 10 is preferably glass and more preferably an alkali glass containing an alkali component. The base material 10 is the same in the material as a plate-shaped member 100 described later. However, in the case where the plate-shaped member 100 is chemically strengthened as described later, a composition of the base material 10 corresponds to a composition of a central portion in a plate thickness direction of the plate-shaped member 100. Specifically, when an element substituted and released in chemical strengthening is referred to by a pre-substitution element and an element substituted and taken in by chemical strengthening is referred to by a substitution element, the plate-shaped member 100 can be said to have a composition in which the pre-substitution element is contained in place of the substitution element on the chemically strengthened surface layer of the plate-shaped member 100.

### (Method for Producing Plate-Shaped Member)

Next, the method for producing the plate-shaped member 100 from the base material 10 will be described. As illustrated in FIG. 1, in this production method, the openings H are formed on the surface 10A of the base material 10 by irradiating the surface 10A of the base material 10 with the laser light L from an irradiation device A. That is, the openings H are holes formed by the laser light L.

The openings H are linear damaged portions that penetrate from the surface 10A to the surface 10B and may be linear damaged portions that do not penetrate to the surface 10B. The linear damaged portion may include a modified portion formed by the laser light L. The modified portion is a portion in which a density or a refractive index is changed due to a structural change of the glass or due to melting and re-solidification. The linear damaged portion may include voids in addition to the modified portion, and a crack may exist between the voids.

The irradiation device A emits laser light L in a form of a pulse (pulsed laser). The spot diameter DL of the laser light L may be any value, and is preferably 1 µm or more and 30µm or less, more preferably 2 µm or more and 20 µm or less, and still more preferably 3 µm or more and 10 µm or less. The spot diameter DL within this range makes it possible to form the openings H which are large enough to appropriately fracture the base material 10. The spot diameter DL refers to a diameter of the laser light L at the most converged position (diameter at a focal position).

The wavelength band of the laser light L may be any value, and is, for example, 350 nm or more and 1,100 nm or less. The irradiation device A may emit the laser light L at any output, may output the laser light L having an output value of 10W or more and 150W or less, and may be able to change the output value of the laser light L.

The irradiation device A includes a light source unit A1, a condensing lens A2, and a scanning mechanism A3. The light source unit A1 is a light source that generates the laser light L. The condensing lens A2 is provided on a traveling direction side of the laser light L with respect to the light source unit A1, and the laser light L from the light source unit A1 is incident thereon. The condensing lens A2 collects the incident laser light L and emits the laser light L toward the surface 10A. The scanning mechanism A3 is a mechanism that scans (sweeps) the laser light L.

That is, the scanning mechanism A3 scans (moves) an irradiation position, which is a position of the laser light L irradiated on the surface 10A, in a direction parallel to the surface 10A. The scanning mechanism A3 may be any mechanism as long as the laser light L can be scanned, and may be, for example, a galvano mirror.

The configuration of the irradiation device A is not limited to the above description and may be any configuration capable of irradiating the laser light L while scanning the irradiation position in the direction parallel to the surface 10A. Examples thereof include a configuration in which the position of a laser head from which the laser light L is emitted, such as the light source unit A1 or the condensing lens A2, is fixed and the irradiation position is scanned by moving the base material 10 irradiated with the laser light L. That is, it can be said that the irradiation position may be scanned by moving a relative position between a spot position of the laser light L and the base material 10.

In this production method, a plurality of openings H are formed at a predetermined interval along a scanning direction (moving direction) of the irradiation position by emitting the laser light L while scanning the irradiation position. That is, in this production method, the plurality of openings H arranged at the predetermined interval along a scanning trajectory of the irradiation position of the laser light L are formed on the surface 10A of the base material 10.

### (Trajectory)

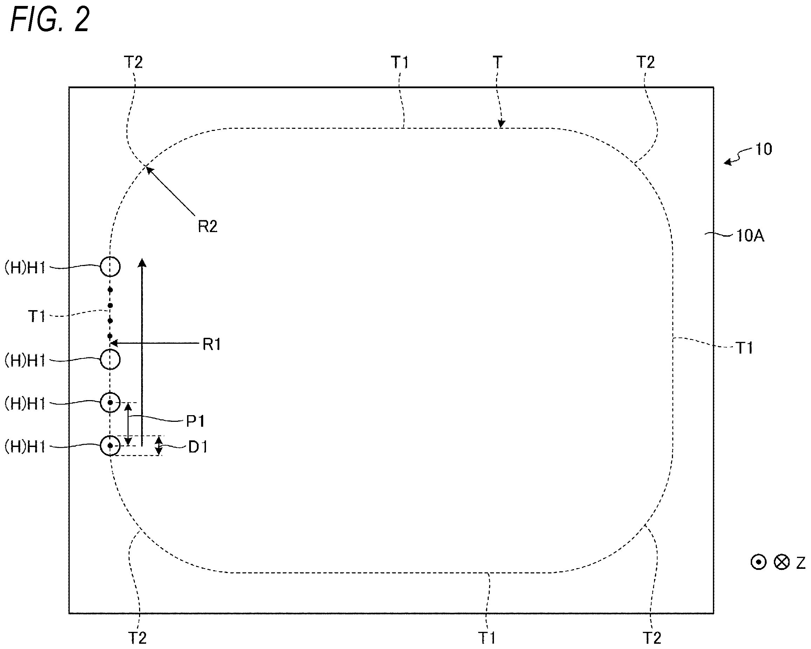

FIG. 2 is a schematic diagram illustrating the irradiation of the laser light along a first trajectory. In the present embodiment, as illustrated in FIG. 2, the trajectory T that scans the irradiation position of the laser light L on the surface 10A of the base material 10 is set to include a first trajectory T1 and a second trajectory T2.

The curvature radius R 1 of the first trajectory T1 when viewed from the Z direction is 100 mm or more, preferably 1,000 mm or more, and more preferably 2,500 mm or more. In this way, the first trajectory T1 has a large curvature radius, the upper limit thereof is not particularly limited, and the first trajectory T1 may have, for example, a linear shape.

The second trajectory T2 is a trajectory continuous with the first trajectory T1 (connected to the first trajectory T1). The curvature radius R2 of the second trajectory T2 when viewed from the Z direction is less than 100 mm, preferably 2 mm or more, and more preferably 3 mm or more. The curvature radius R2 is preferably 10 mm or less and more preferably 5 mm or less. In this way, the second trajectory T2 has a smaller curvature radius than the first trajectory T1, and has a curved shape.

In the example of FIG. 2, the trajectory T includes four first trajectories T1 corresponding to four sides of a rectangle and four second trajectories T2 provided between a pair of first trajectories T1, but the trajectory T is not limited thereto. The trajectory T may have any shape including the first trajectory T1 and the second trajectory T2.

### (Irradiation of Laser Light along First Trajectory)

In this production method, as illustrated in FIG. 2, the surface 10A of the base material 10 is irradiated with the laser light L along the first trajectory T 1. That is, the pulsed laser light L is emitted while the irradiation position of the laser light L is scanned (moved) along the first trajectory T1. In this way, a plurality of openings H1 arranged along the first trajectory T1 are formed on the surface 10A of the base material 10.

In this production method, the diameter D1 of the opening H1 is preferably 0.2 µm or more and 20 µm or less, more preferably 0.5 µm or more and 10 µm or less, and still more preferably 1 µm or more and 5 µm or less. The diameter D1 of the opening H1 within this range makes it possible to appropriately fracture the base material 10 with the openings H1 as the starting points.

The distance between centers of the openings H1 adjacent to each other along the first trajectory T1 is denoted by an irradiation pitch P1 of the laser light on the first trajectory. In this production method, the openings H1 are formed so that the irradiation pitch P1 is 9 µm or less. Furthermore, in this production method, the irradiation pitch P1 is preferably 6 µm or more and more preferably more than 7 µm. The irradiation pitch P1 is preferably 8 µm or less.

In this production method, the irradiation pitch P1 is preferably 400% or more and 600% or less, and still more preferably 450% or more and 550% or less with respect to the diameter D1 of the opening H 1.

In this production method, the irradiation pitch P1 is preferably 120% or more and more preferably 140% or more with respect to the spot diameter DL of the laser light L. The irradiation pitch P1 is preferably 180% or less and more preferably 160% or less with respect to the spot diameter DL of the laser light L.

The irradiation pitch P1 within this range makes it possible to prevent occurrence of cracks (cracks other than the openings H1) in portions along the first trajectory T1 when the base material 10 is fractured with the openings H1 as the starting points.

### (Irradiation of Laser Light along Second Trajectory)

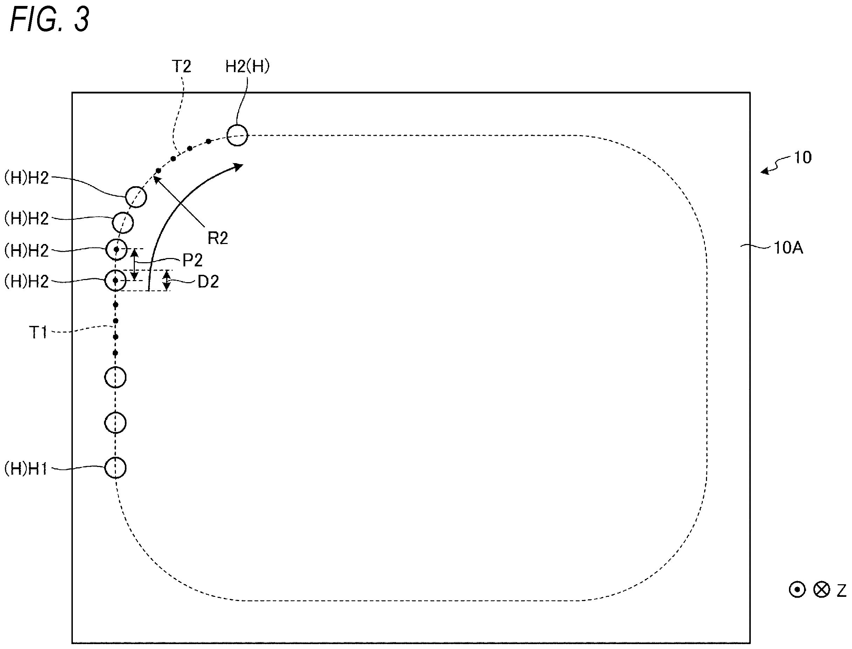

FIG. 3 is a schematic diagram illustrating irradiation of the laser light along a second trajectory. In this production method, as illustrated in FIG. 3, the surface 10A of the base material 10 is irradiated with the laser light L along the second trajectory T2. That is, the pulsed laser light L is emitted while the irradiation position of the laser light L is scanned (moved) along the second trajectory T2. In this way, a plurality of openings H2 arranged along the second trajectory T2 are formed on the surface 10A of the base material 10.

In this production method, the diameter D2 of the opening H2 is preferably 0.2 µm or more and 20 µm or less, more preferably 0.5 µm or more and 10 µm or less, and still more preferably 1 µm or more and 5 µm or less. The diameter D2 of the opening H2 within this range makes it possible to appropriately fracture the base material 10 with the openings H2 as the starting points.

The distance between centers of the openings H2 adjacent to each other along the second trajectory T2 is denoted by an irradiation pitch P2 of the laser light on the second trajectory. In this production method, the openings H2 are formed so that the irradiation pitch P2 is smaller than the irradiation pitch P1 of the openings H 1. In this production method, the irradiation pitch P2 is preferably 7 µm or less and more preferably 6 µm or less. In this production method, the irradiation pitch P2 is preferably 5 µm or more.

In this production method, the irradiation pitch P2 is preferably 450% or less, and more preferably 350% or more and 400% or less with respect to the diameter D2 of the opening H2.

In this production method, the irradiation pitch P2 is preferably 140% or less and more preferably 120% or less with respect to the spot diameter DL of the laser light L. The irradiation pitch P2 is preferably 100% or more with respect to the spot diameter DL of the laser light L.

In this production method, the irradiation pitch P2 is preferably 2,000% or less, more preferably 40% or more and 200% or less, and still more preferably 60% or more and 100% or less with respect to the curvature radius R2 of the second trajectory T2.

The irradiation pitch P2 within this range makes it possible to prevent the occurrence of cracks (cracks other than the openings H2) in portions along the second trajectory T2 when the base material 10 is fractured with the openings H2 as the starting points.

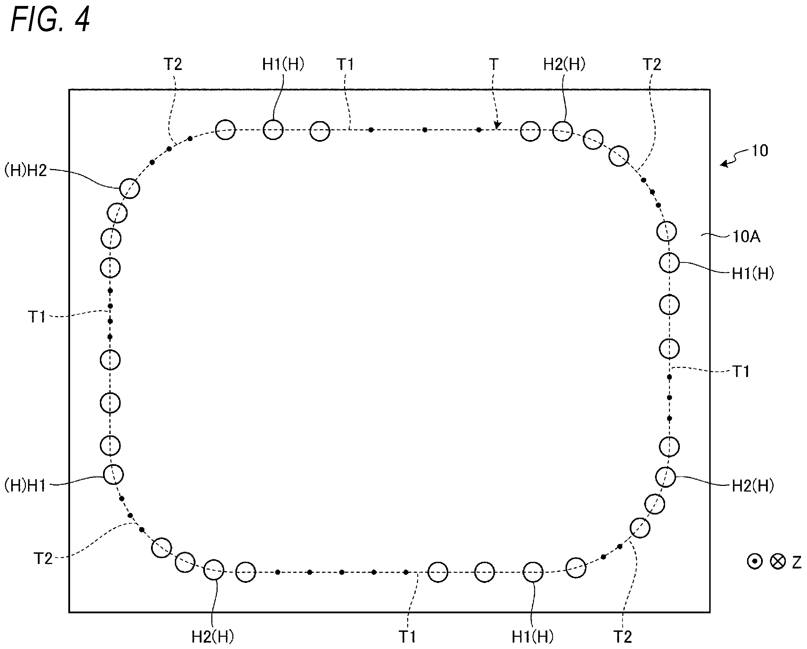

FIG. 4 is a schematic diagram illustrating an example in which openings are formed over the entire section of the trajectory. In this production method, as illustrated in FIG. 4, the openings H are formed over the entire section of the trajectory T. That is, the openings H1 are formed at the irradiation pitch P1 in a section of the first trajectory T1, and the openings H2 are formed at the irradiation pitch P2 in a section of the second trajectory T2 in the trajectory T.

In FIG. 4, for convenience of description, only some of the openings H1 and H2 in the first trajectory T1 and the second trajectory T2 are illustrated, but the openings H1 and H2 are formed over the entire section of the first trajectory T1 and the second trajectory T2 actually.

In the above description, the opening H1 is first formed along the first trajectory T1, and then the opening H2 is formed along the second trajectory T2 continuous with the first trajectory T1. Therefore, in the example of FIG. 4, the openings H1 and the openings H2 are formed along the trajectory in the order of the first trajectory T1, the second trajectory T2 continuous with this first trajectory T1, the first trajectory T1 continuous with this second trajectory T2, and the second trajectory T2 continuous with this first trajectory T 1.

However, the order of the formation of the openings H1 and H2 is not limited thereto, and the opening H2 may be formed first along the second trajectory T2 and then the opening H1 may be formed along the first trajectory T1 continuous with this second trajectory T2. That is, in the example of FIG. 4, the openings H1 and the openings H2 may be formed along the trajectory in the order of the second trajectory T2, the first trajectory T1 continuous with this second trajectory T2, the second trajectory T2 continuous with this first trajectory T1, and the first trajectory T1 continuous with this second trajectory T2.

In addition, it is not limited to processing along a continuous trajectory. For example, the openings H1 may be formed in each first trajectory T1 and then the openings H2 may be formed in each second trajectory T2, the openings H2 may be formed in each second trajectory T2 and then the openings H1 may be formed in each first trajectory T1, or the formation of the openings H1 in the first trajectory T1 and the formation of the openings H2 in the second trajectory T2 may be simultaneously performed.

### (Fracturing with Opening as Starting Point)

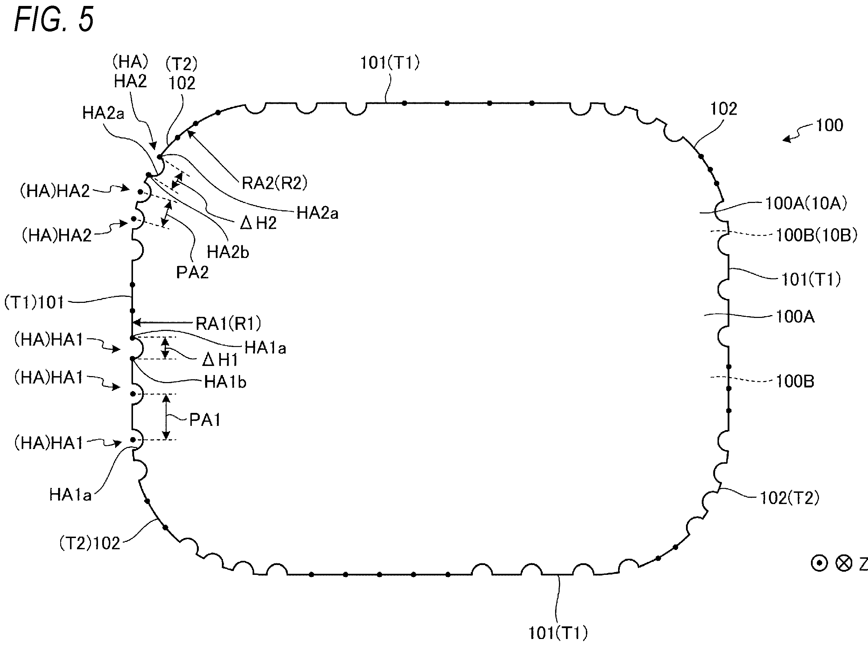

FIG. 5 is a schematic diagram of a plate-shaped member. After the openings H1 are formed in the first trajectory T1 and the openings H2 are formed in the second trajectory T2, in this production method, the plate-shaped member 100 is separated (cut out) from the base material 10 by fracturing the base material 10 with the openings H1 and H2 as the starting points.

Since the openings H1 are formed along the first trajectory T1 and the openings H2 are formed along the second trajectory T2, the base material 10 is fractured along the first trajectory T1 and the second trajectory T2 by fracturing the base material 10 with the openings H1 and H2 as the starting points, and the plate-shaped member 100 is cut out as illustrated in FIG. 5.

As will be described in detail later, the plate-shaped member 100 has a first end surface 101 that is a fracture surface along the first trajectory T1 and a second end surface 102 that is a fracture surface along the second trajectory T2, and damaged portions HA1 corresponding to the openings H1 remain on the first end surface 101 and damaged portions HA2 corresponding to the openings H2 remain on the second end surface 102.

In FIG. 5, for convenience of description, only some of the damaged portions HA1 and HA2 of the first end surface 101 and the second end surface 102 are illustrated, but the damaged portions HA1 and HA2 are formed over the entire section of the first end surface 101 and the second end surface 102 actually.

In the present embodiment, the base material 10 may be fractured with the openings H1 and H2 as the starting points by generating stress on the surface 10A along the trajectory T. For example, the stress is generated on the surface 10A along the trajectory T by irradiating the surface 10A with CO₂ laser along the trajectory T, to fracture the base material 10 with the openings H1 and H2 as the starting points.

However, the method for fracturing the base material 10 with the openings H1 and H2 as the starting points is not limited to the irradiation of the CO₂ laser, and the base material 10 may be fractured with the openings H1 and H2 as the starting points by generating a stress on the surface 10A along the trajectory T by applying a bending load along the trajectory T of the surface 10A by a mechanical method. Here, the mechanical method refers to physically generating a bending load, and for example, the bending load may be generated by a machine, and the bending load may be generated manually by an operator.

### (Chemical Strengthening)

In this production method, the plate-shaped member 100 cut out from the base material 10 may be subjected to a chemical strengthening treatment to form a compressive stress layer on a surface of the plate-shaped member 100. The chemical strengthening treatment may be performed by any method, and is performed by, for example, immersing the plate-shaped member 100 in a molten salt containing alkali metals.

A typical method includes immersing the plate-shaped member 100 in KNO₃ molten salt to perform an ion exchange treatment, followed by cooling to around room temperature. Treatment conditions such as the temperature of the KNO₃ molten salt and the immersion time may be set such that the surface compressive stress and the thickness of the compressive stress layer satisfy desired values. The chemical strengthening method is not limited to those using a potassium salt such as the KNO₃ molten salt and may be any method. For example, the chemical strengthening may be performed by using a sodium salt.

Further, the chemical strengthening treatment is preferably performed after cutting out the plate-shaped member 100 but is not limited thereto. The chemical strengthening treatment may be performed on the base material 10 before being cut out, and then the plate-shaped member 100 may be cut out from the base material 10 that has been subjected to the chemical strengthening treatment.

### (Production Flow)

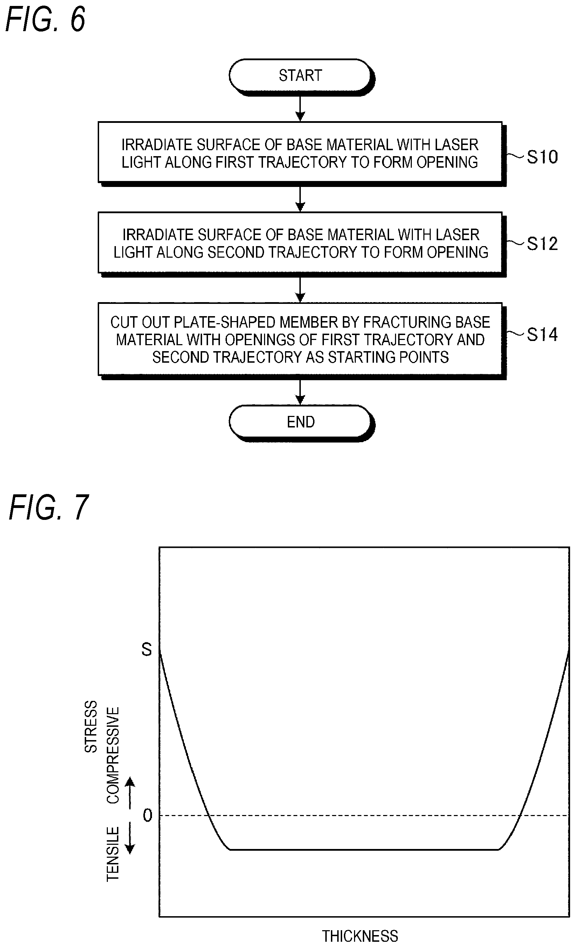

Next, a flow of this production method will be described. FIG. 6 is a flowchart illustrating the flow for producing the plate-shaped member according to the present embodiment.

As shown in FIG. 6, in this production method, the base material 10 is prepared, and the surface 10A of the base material 10 is irradiated with the laser light L along the first trajectory T1 to form a plurality of openings H1 arranged along the first trajectory T1 (step S10).

Then, the surface 10A of the base material 10 is irradiated with the laser light L along the second trajectory T2 continuous with the first trajectory T1 to form a plurality of openings H2 along the second trajectory T2 (step S12).

In the case where another first trajectory T1 is continuous with the second trajectory T2, the openings H1 are formed along this first trajectory T1. That is, in the present embodiment, the openings H1 and H2 are formed in the order of the first trajectory T1, the second trajectory T2, the first trajectory T1, and ... along the trajectory T. Steps S10 and S12 may be executed in any order For example, the openings H1 and H2 may be formed in the order of the second trajectory T2, the first trajectory T1, the second trajectory T2, and .... As described above, the openings H1 of the first trajectory T1 and the openings H2 of the second trajectory T2 may be separately formed without being processed along the continuous trajectory T.

In this production method, the plate-shaped member 100 is cut out by fracturing the base material 10 with the openings H1 and H2 of the first trajectory T1 and the second trajectory T2 as the starting points (step S14). In this way, the plate-shaped member 100 is produced, and for example, the plate-shaped member 100 cut out from the base material 10 may be subjected to the chemical strengthening treatment.

### (Plate-Shaped Member)

Next, characteristics of the plate-shaped member 100 will be described. The plate-shaped member 100 described below is produced by the production method described above, and as long as the plate-shaped member 100 has characteristics described below, the production method may be any method.

As illustrated in FIG. 5, the plate-shaped member 100 includes a surface 100A that is one main surface and a surface 100B that is the other main surface. That is, a region of the surface 10A of the base material 10 cut out as the plate-shaped member 100 is the surface 100A of the plate-shaped member 100, and a region of the surface 10B of the base material 10 cut out as the plate-shaped member 100 is the surface 100B of the plate-shaped member 100. The plate-shaped member 100 includes the first end surface 101 which is an end surface formed by being fractured along the first trajectory T1 and the second end surface 102 which is an end surface formed by being fractured along the second trajectory T2.

The thickness of the plate-shaped member 100, that is, the distance from the surface 100A to the surface 100B in the Z direction may be the same as the thickness D of the base material 10. In the example of FIG. 5, the plate-shaped member 100 has a flat plate shape, but is not limited thereto, and may have the shape of a curved flat plate. That is, the plate-shaped member 100 may have a curved surface shape in which the surfaces 100A and 100B are convex in the Z direction.

In the case where the surfaces 100A and 100B of the plate-shaped member 100 are curved and convex in the Z direction, the curvature radius of the surfaces 100A and 100B of the plate-shaped member 100 is preferably 10,000 mm or less, more preferably 5,000 mm or less, and still more preferably 3,000 mm or less. In the case where the surfaces 100A and 100B of the plate-shaped member 100 are curved and convex in the Z direction, the curvature radius of the surfaces 100A and 100B of the plate-shaped member 100 is preferably 10 mm or more, more preferably 50 mm or more, still more preferably 100 mm or more, and particularly preferably 200 mm or more.

### (First End Surface)

The first end surface 101 of the plate-shaped member 100 is a cross section formed by fracturing the base material 10 along the first trajectory T1. Therefore, at least a part of the opening H1 formed in the base material 10 remains on the first end surface 101 as the damaged portion HA1. The damaged portion HA1 is a part of the opening H1 formed by the irradiation with the laser light L and can be said to be a linear damaged portion that is an irradiation mark (laser mark) of the laser light L. That is, the linear damaged portion HA1 extending in the Z direction (axial direction) is formed in the first end surface 101. In the first end surface 101, a plurality of damaged portions HA1 are formed along a circumferential direction (that is, along the first trajectory T1) when the Z direction is taken as the axial direction.

Here, the curvature radius of a line (corresponding to the first trajectory T1) connecting the centers of the damaged portions HA1 when viewed from the Z direction is defined as a curvature radius RA1 of the first end surface 101 when viewed from the Z direction. The curvature radius RA1 of the first end surface 101 corresponds to the curvature radius R1 of the first trajectory T1 and is 100 mm or more, preferably 1,000 mm or more, and more preferably 2,500 mm or more. The upper limit of the curvature radius RA1 of the first end surface 101 is not particularly limited and may be, for example, a straight line.

When one end portion of the damaged portion HA1 is defined as an end portion HA1a and the other end portion of the damaged portion HA1 is defined as an end portion HAlb in the circumferential direction of the first end surface 101 (that is, the direction along the first trajectory T1), the center of the damaged portion HA1 refers to the midpoint between the end portion HA1a and the end portion HAlb on the surface 100A, in other words, the midpoint of the width ΔH1 described later.

The width ΔH1 of the damaged portion HA1 when viewed from the Z direction is preferably 20 µm or less, more preferably 10 µm or less, and still more preferably 5 µm or less. The distance from the end portion HA1a to the end portion HAlb on the surface 100A is defined as the width ΔH1 of the damaged portion HA1.

The distance between the center of the damaged portion HA1 and the center of another damaged portion HA1 adjacent to this damaged portion HA1 when viewed from the Z direction is defined as a pitch PA1. The pitch PA1 corresponds to the irradiation pitch P1 and is 9 µm or less. In the present embodiment, the pitch PA1 is preferably 6 µm or more and more preferably more than 7 µm. The pitch PA1 is preferably 8 µm or less.

The pitch PA1 is preferably 600% or less, more preferably 400% or more and 600% or less, and still more preferably 450% or more and 550% or less with respect to the width ΔH1 of the damaged portion HA1.

In the plate-shaped member 100 having the pitch PA1 within this range, formation of cracks (cracks other than the damaged portion HA1) in the first end surface 101 is prevented.

The pitch PA1 may refer to an average value of the pitches PA1 of 10 pairs of adjacent damaged portions HA1 arbitrary selected in each trajectory.

### (Second End Surface)

The second end surface 102 is an end surface continuous with the first end surface 101 (connected to the first end surface 101). The second end surface 102 is a cross section formed by fracturing the base material 10 along the second trajectory T2. Therefore, at least a part of the opening H2 formed in the base material 10 remains on the second end surface 102 as the damaged portion HA2.

The damaged portion HA2 is a part of the opening H2 formed by the irradiation with the laser light L and can be said to be a linear damaged portion that is an irradiation mark (laser mark) of the laser light L. That is, the linear damaged portion HA2 extending in the Z direction (axial direction) is formed in the second end surface 102. In the second end surface 102, a plurality of damaged portions HA2 are formed along the circumferential direction (that is, along the second trajectory T2) when the Z direction is taken as the axial direction.

Here, the curvature radius of a line (corresponding to the second trajectory T2) connecting the centers of the damaged portions HA2 when viewed from the Z direction is defined as a curvature radius RA2 of the second end surface 102 when viewed from the Z direction. The curvature radius RA2 of the second end surface 102 corresponds to the curvature radius R2 of the second trajectory T2 and is less than 100 mm, preferably 10 mm or less, and more preferably 5 mm or less. The curvature radius RA2 of the second end surface 102 is preferably 2 mm or more and more preferably 3 mm or more.

Thus, the second end surface 102 has a curvature radius smaller than the first end surface 101 and has an R shape. When one end portion of the damaged portion HA2 is defined as an end portion HA2a and the other end portion of the damaged portion HA2 is defined as the end portion HA2b in a circumferential direction of the second end surface 102 (that is, the direction along the second trajectory T2), the center of the damaged portion HA2 refers to the midpoint between the end portion HA2a and the end portion HA2b on the surface 100A, in other words, the midpoint of the width ΔH2 described later.

The width ΔH2 of the damaged portion HA2 when viewed from the Z direction is half the diameter D2 of the opening H2 (that is, the radius of the opening H2), preferably 20 µm or less, more preferably 10 µm or less, and still more preferably 5 µm or less. The distance from the end portion HA2a to the end portion HA2b on the surface 100A is defined as the width ΔH2 of the damaged portion HA2.

The distance between the center of the damaged portion HA2 and the center of another damaged portion HA2 adjacent to this damaged portion HA2 when viewed from the Z direction is defined as a pitch PA2. The pitch PA2 corresponds to the irradiation pitch P2 and is smaller than the pitch PA1 of the damaged portion HA1. The pitch PA2 is preferably 7 µm or less and more preferably 6 µm or less. The pitch PA2 is preferably 5 µm or more.

The pitch PA2 is preferably 450% or less and still more preferably 350% or more and 400% or less with respect to the width ΔH2 of the damaged portion HA2.

The pitch PA2 is preferably 2,000% or less, more preferably 40% or more and 200% or less, and still more preferably 60% or more and 100% or less with respect to the curvature radius RA2 of the second end surface 102.

In the plate-shaped member 100 having the pitch PA2 within this range, formation of cracks (cracks other than the damaged portion HA2) in the second end surface 102 is prevented.

The pitch PA2 may refer to an average value of the pitches PA2 of 10 pairs of adjacent damaged portions HA2 arbitrary selected in each trajectory.

In this way, the plate-shaped member 100 includes the damaged portions HA1 formed on the first end surface 101 and the damaged portions HA2 formed on the second end surface 102. However, the damaged portions HA1 and HA2 may be removed by polishing the first end surface 101 and the second end surface 102.

The plate-shaped member 100 preferably has no damaged portion (crack) on the first end surface 101 other than the damaged portions HA1. In the present embodiment, for example, a groove in which the distance from the line (corresponding to the first trajectory T1) connecting the centers of the damaged portions HA1 to a bottom surface of the groove is 100 µm or more when viewed from the Z direction may be determined as a damaged portion (crack) other than the damaged portions HA1 on the plate-shaped member of the present embodiment.

Similarly, the plate-shaped member 100 preferably has no damaged portion (crack) on the second end surface 102 other than the damaged portions HA2. In the present embodiment, a groove in which the distance from the line (corresponding to the second trajectory T2) connecting the centers of the damaged portions HA2 to a bottom surface of the groove is 100 µm or more when viewed from the Z direction may be determined as a damaged portion (crack) other than the damaged portions HA2 on the plate-shaped member of the present embodiment.

### (Material of Plate-Shaped Member)

The plate-shaped member 100 is a transparent plate-shaped member. The material of the plate-shaped member 100 may be any material and is preferably glass. The plate-shaped member 100 may be an amorphous glass or a crystallized glass containing crystals on a surface or inside thereof.

As the plate-shaped member 100, for example, an alkali-free glass, a soda lime glass, a soda lime silicate glass, an aluminosilicate glass, a borosilicate glass, a lithium aluminosilicate glass, and a borosilicate glass can be used. The material of the plate-shaped member 100 is preferably an alkali glass in order to appropriately perform chemical strengthening.

More specifically, the plate-shaped member 100 is preferably an aluminosilicate glass or a lithium aluminosilicate glass to which large stress can be easily introduced by a strengthening treatment even in the case where the thickness is thin and by which a high-strength glass can be obtained even in the case where the thickness is thin. A glass for chemical strengthening, which is based on the aluminosilicate glass, (for example, "Dragontrail (registered trademark)" manufactured by AGC Inc.) is also suitably used.

### (Composition of Glass)

The plate-shaped member 100 may contain, in terms of mol% based on oxides, 50% to 80% of SiO₂, 1% to 20% of Al₂O₃, and 6% to 20% of Na₂O.

In addition, the plate-shaped member 100 may contain, in terms of mol% based on oxides, 50% to 80% of SiO₂, 0.1% to 25% of Al₂O₃, 3% to 30% of Li₂O+Na₂O+K₂O, 0% to 25% of MgO, 0% to 25% of CaO, and 0% to 5% of ZrO₂.

Further, the plate-shaped member 100 may contain, in terms of mol% based on oxides, 50% to 80% of SiO₂, 1% to 20% of Al₂O₃, 6% to 20% of Na₂O, 0% to 11% of K₂O, 0% to 15% of MgO, 0% to 6% of CaO, and 0% to 5% of ZrO₂.

A numerical range represented by using "to" means a range including numerical values described before and after "to" as a lower limit value and an upper limit value. For example, "50% to 80%" used herein refers to 50% or more and 80% or less when mol% of the total amount of the plate-shaped member 100 is 100%, and the same applies to the other numerical ranges. Further, for example, "Li₂O+Na₂O+K₂O" indicates the total content of Li₂O, Na₂O, and K₂O, and the same applies to the other cases where "+" is used.

More specifically, a more preferable composition of the plate-shaped member 100 includes the following glass compositions. For example, "containing 0% to 25% of MgO" means that MgO is not essential but may be contained up to 25%.

Glass of (i) is categorized in the soda lime silicate glass, glass of (ii) and (iii) are categorized in the aluminosilicate glass, and glass of (iv) and (v) are categorized in the lithium aluminosilicate glass.
(i) Glass having a composition containing, in terms of mol%, 63% to 73% of SiO₂, 0.1% to 5.2% of Al₂O₃, 10% to 16% of Na₂O, 0% to 1.5% of K₂O, 0% to 5% of Li₂O, 5% to 13% of MgO, and 4% to 10% of CaO
(ii) Glass having a composition containing, in terms of mol%, 50% to 74% of SiO₂, 1% to 10% of Al₂O₃, 6% to 14% of Na₂O, 3% to 11% of K₂O, 0% to 5% of Li₂O, 2% to 15% of MgO, 0% to 6% of CaO, and 0% to 5% of ZrO₂, in which the total content of SiO₂ and Al₂O₃ is 75% or less, the total content of Na₂O and K₂O is 12% to 25%, and the total content of MgO and CaO is 7% to 15%
(iii) Glass having a composition containing, in terms of mol%, 68% to 80% of SiO₂, 4% to 10% of Al₂O₃, 5% to 15% of Na₂O, 0% to 1% of K₂O, 0% to 5% of Li₂O, 4% to 15% of MgO, and 0% to 1% of ZrO₂
(iv) Glass having a composition containing, in terms of mol%, 67% to 75% of SiO₂, 0% to 4% of Al₂O₃, 7% to 15% of Na₂O, 1% to 9% of K₂O, 0% to 5% of Li₂O, 6% to 14% of MgO, and 0% to 1.5% of ZrO₂, in which the total content of SiO₂ and Al₂O₃ is 71% to 75%, the total content of Na₂O and K₂O is 12% to 20%, and the content of CaO is less than 1% in the case where CaO is contained
(v) Glass having a composition containing, in terms of mol%, 56% to 73% of SiO₂, 10% to 24% of Al₂O₃, 0% to 6% of B₂O₃, 0% to 6% of P₂O₅, 2% to 7% of Li₂O, 3% to 11% of Na₂O, 0% to 5% of K₂O, 0% to 8% of MgO, 0% to 2% of CaO, 0% to 5% of SrO, 0% to 5% of BaO, 0% to 5% of ZnO, 0% to 2% of TiO₂, and 0% to 4% of ZrO₂

### (Compressive Stress Layer)

The plate-shaped member 100 includes a compressive stress layer in the case where the chemical strengthening treatment is performed. The compressive stress layer is formed on the entire surface of the plate-shaped member 100, that is, on the surface 100A, the surface 100B, the first end surface 101, and the second end surface 102.

In the plate-shaped member 100, the compressive stress layer is not limited to being formed on all of the surface 100A, the surface 100B, the first end surface 101, and the second end surface 102, and the compressive stress layer may be formed on at least one of the surface 100A, the surface 100B, the first end surface 101, and the second end surface 102 (preferably, at least the surface 100A).

FIG. 7 is a graph illustrating an example of stress distribution in a thickness direction of the plate-shaped member. The compressive stress layer is a layer on which compressive stress acts in the plate-shaped member 100. As illustrated in the example of FIG. 7, a compressive stress S acts on the surface of the plate-shaped member 100, and the compressive stress decreases toward a center in the thickness direction of the plate-shaped member.

In the example of FIG. 7, it can be said that the compressive stress layer is a portion from the surface to a depth at which the stress becomes zero, among the entire plate-shaped member 100. In the plate-shaped member 100, tensile stress acts on a layer deeper than the depth at which the stress becomes zero. Hereinafter, the compressive stress acting on the surface of the plate-shaped member 100, that is, the surface of the compressive stress layer is referred to as a surface compressive stress CS.

In the plate-shaped member 100, the surface compressive stress CS is preferably 500 MPa or more and 1,200 MPa or less, more preferably 650 MPa or more, and still more preferably 750 MPa or more. In the case where the surface compressive stress CS falls within this range, a decrease in impact resistance can be appropriately prevented.

The surface compressive stress CS may be measured by any method, and may be measured, for example, by measuring a strain in the plate-shaped member 100 by using a photoelasticity analysis method. In the present embodiment, the surface compressive stress CS may be measured by using, for example, FSM-6000LE which is a surface stress meter manufactured by Orihara Manufacturing Co., LTD.

In the plate-shaped member 100, the depth DOL of the compressive stress layer is preferably 10 µm or more and 100 µm or less, more preferably 15 µm or more, still more preferably 25 µm or more, and particularly preferably 30 µm or more.

The depth DOL refers to a thickness of the compressive stress layer in the plate-shaped member 100. That is, the depth DOL refers to the distance in the thickness direction from the surface of the plate-shaped member 100 on which the surface compressive stress CS acts to the depth at which the value of the compressive stress becomes 0. In the plate-shaped member 100, in the case where the depth DOL falls within this range, a decrease in impact resistance can be appropriately prevented.

The depth DOL may be measured by any method, and may be measured, for example, by measuring a strain in the plate-shaped member 100 by using the photoelasticity analysis method. In the present embodiment, the depth DOL may be measured by using, for example, FSM-6000LE which is a surface stress meter manufactured by Orihara Manufacturing Co., LTD.

### (Use of Plate-shaped Member)

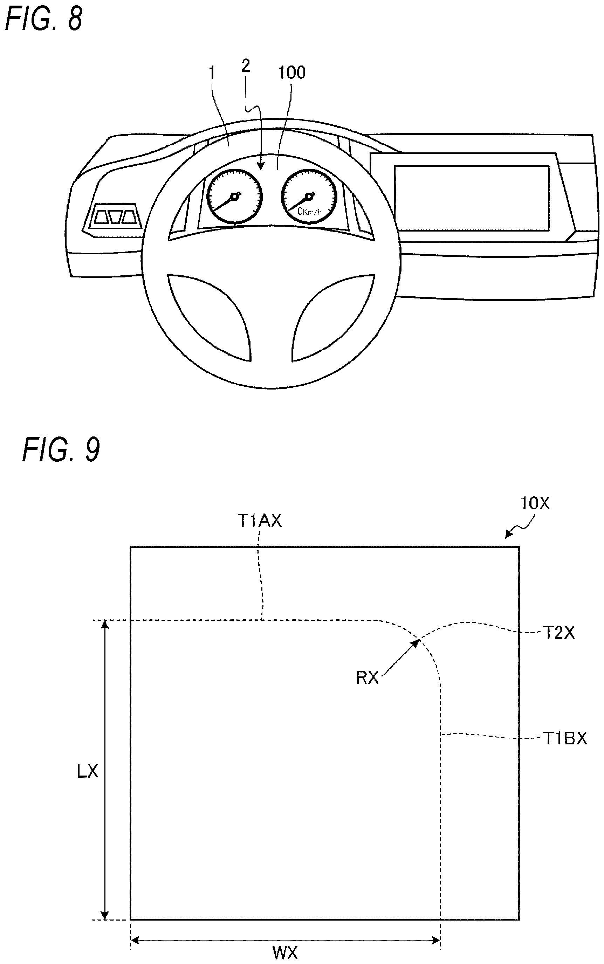

FIG. 8 is a schematic diagram illustrating an on-vehicle display according to the present embodiment. As illustrated in FIG. 8, the plate-shaped member 100 according to the present embodiment is provided in an on-vehicle display 2 and is used as a cover member on a surface of the on-vehicle display.

The on-vehicle display 2 is a display device provided in a vehicle and is provided, for example, on a front side of a steering shaft 1 in the vehicle. The on-vehicle display 2 displays, for example, a start button, various meters such as a car navigation screen and a speedometer, and the like. However, the configuration in FIG. 8 is an example, and the on-vehicle display 2 to which the plate-shaped member 100 is applied may have any configuration. In addition, the plate-shaped member 100 is not limited to being used as a cover member for the surface of the on-vehicle display and may be used for any application.

### (Effect)

As described above, the production method according to the present embodiment includes: a step of forming a plurality of openings H1 along the first trajectory T1 on the surface 10A of the base material 10 by irradiating the surface 10A of the base material 10 with the pulse-oscillated laser light L along the first trajectory T1, the first trajectory T1 having a curvature radius of 100 mm or more; a step of forming a plurality of openings H2 along the second trajectory T2 on the surface 10A of the base material 10 by irradiating the surface 10A of the base material 10 with the laser light L along the second trajectory T2, the second trajectory T2 being continuous with the first trajectory T1 and having a curvature radius of less than 100 mm; and a step of cutting out the plate-shaped member 100 from the base material 10 by fracturing the base material 10 with the openings H1 and H2 along the first trajectory T1 and the second trajectory T2 as the starting points. The irradiation pitch P1 of the laser light L on the first trajectory T1 is 9 µm or less, and the irradiation pitch P2 of the laser light L on the second trajectory T2 is smaller than the irradiation pitch P1.

In general, when the plate-shaped member 100 is cut out by fracturing the base material 10 with the openings as the starting points, cracks other than the openings may occur in the fractured cross section. In contrast, in the present embodiment, by setting the irradiation pitch P1 of the first trajectory T1 to 9 µm or less, it is possible to prevent the occurrence of cracks in the first end surface 101 (cross section) of the plate-shaped member 100 corresponding to the first trajectory T1.

Further, the inventors of the present invention found that, at the time of fracture, since stress is concentrated on the second trajectory T2 which is a curved shape, a risk of the occurrence of cracks in the second end surface 102 corresponding to the second trajectory T2 is higher. In contrast, in the present embodiment, the occurrence of cracks in the second end surface 102 can be prevented by setting the irradiation pitch P2 of the second trajectory T2 smaller than the irradiation pitch P1 of the first trajectory T1. As described above, in the present embodiment, when the base material 10 is fractured along the first trajectory T1 and the second trajectory T2, the occurrence of cracks can be prevented by devising the irradiation pitches P 1 and P2.

The base material 10 is preferably a glass and more preferably an alkali glass. By using a glass as the base material 10, the plate-shaped member 100 made of a glass can be appropriately produced, and by using an alkali glass as the base material 10, the plate-shaped member 100 can be appropriately chemically strengthened.

The irradiation pitch P1 of the laser light L on the first trajectory T1 is preferably 120% or more and 180% or less with respect to the spot diameter DL of the laser light L, and the irradiation pitch P2 of the laser light L on the second trajectory T2 is preferably 140% or less with respect to the spot diameter DL of the laser light L. By setting the irradiation pitches P1 and P2 within this range, the occurrence of cracks can be prevented more appropriately.

The irradiation pitch P2 of the laser light L on the second trajectory T2 is preferably 7 µm or less. By setting the irradiation pitch P2 within this range, the occurrence of cracks on the second end surface 102 can be prevented more appropriately.

The curvature radius of the first trajectory T1 is preferably 1,000 mm or more, and the curvature radius of the second trajectory T2 is preferably 2 mm or more and 10 mm or less. According to this embodiment, it is possible to appropriately prevent the occurrence of cracks when the base material 10 is fractured along such a trajectory.

It is preferable that the base material 10 has a curved surface shape in which the curvature radius of the surface 10A is 10,000 mm or less. Such a curved surface-shaped base material 10 may have a high risk of crack occurrence when fractured, but the occurrence of cracks can be appropriately prevented by setting the irradiation pitches P1 and P2 as the present embodiment.

The plate-shaped member 100 is preferably used as a cover member of an on-vehicle display device. According to the present embodiment, it is possible to appropriately prevent the occurrence of cracks in the plate-shaped member 100 provided in the on-vehicle display device.

The plate-shaped member 100 according to the present embodiment has the first end surface 101 having a curvature radius of 100 mm or more when viewed from the Z direction (thickness direction) and the second end surface 102 having a curvature radius of less than 100 mm when viewed from the Z direction (thickness direction) and connected to the first end surface 101.

A plurality of the linear damaged portions HA1 extending in the thickness direction (Z direction) of the plate-shaped member 100 are formed on the first end surface 101 at the pitch PA1 of 9 µm or less, and a plurality of the linear damaged portions HA2 extending in the thickness direction of the plate-shaped member 100 are formed on the second end surface 102 at the pitch PA2 smaller than the pitch PA1 of the damaged portions HA1. In the present embodiment, since the pitch PA1 of the damaged portions HA1 of the first end surface 101 is 9 µm or less and the pitch PA2 of the damaged portions HA2 of the second end surface 102 is smaller than the pitch PA1, the occurrence of cracks can be prevented.

The damaged portions HA1 and HA2 are preferably laser marks. In the present embodiment, since the pitch PA1 of the laser marks of the first end surface 101 is 9 µm or less and the pitch PA2 of the laser marks of the second end surface 102 is smaller than the pitch PA1, the occurrence of cracks can be prevented.

The plate-shaped member 100 is preferably made of a glass and preferably has a compressive stress layer on the surface thereof. Since the plate-shaped member 100 is made of a glass, it can be used for various applications, and since the compressive stress layer is provided on the surface, a strength can be improved.

The pitch PA1 of the damaged portions HA1 of the first end surface 101 is preferably 600% or less with respect to the width ΔH1 of the damaged portions HA1 of the first end surface 101, and the pitch PA2 of the damaged portions HA2 of the second end surface 102 is preferably 450% or less with respect to the width ΔH2 of the damaged portions HA2 of the second end surface 102. By setting the pitches PA1 and PA2 within this range, the occurrence of cracks can be prevented more appropriately.

The pitch PA2 of the damaged portion HA2 of the second end surface 102 is preferably 7 µm or less. By setting the pitch PA2 within this range, the occurrence of cracks on the second end surface 102 can be prevented more appropriately.

The curvature radius of the first end surface 101 when viewed from the Z direction (thickness direction) is preferably 1,000 mm or more, and the curvature radius of the second end surface 102 when viewed from the Z direction (thickness direction) is preferably 2 mm or more and 10 mm or less. According to the present embodiment, it is possible to appropriately prevent the occurrence of cracks during the production of the plate-shaped member 100 having such a shape.

It is preferable that the plate-shaped member 100 has a curved surface shape in which the curvature radius of the surface 100A is 10,000 mm or less. Such a curved surface-shaped plate-shaped member 100 may have a high risk of crack occurrence when produced, but the occurrence of cracks can be appropriately prevented by setting the pitches PA1 and PA2 as the present embodiment.

The plate-shaped member 100 is preferably used as a cover member of an on-vehicle display device. According to the present embodiment, it is possible to appropriately prevent the occurrence of cracks in the plate-shaped member 100 provided in the on-vehicle display device.

As described above, the following matters are disclosed in the present description.
[1] A method for producing a plate-shaped member including:
   a step of forming a plurality of openings along a first trajectory on a surface of a base material by irradiating the surface of the base material with a pulse-oscillated laser light along the first trajectory, the first trajectory having a curvature radius of 100 mm or more;
   a step of forming a plurality of openings along a second trajectory on the surface of the base material by irradiating the surface of the base material with the laser light along the second trajectory, the second trajectory being continuous with the first trajectory and having a curvature radius of less than 100 mm; and
   a step of cutting out a plate-shaped member from the base material by fracturing the base material with the openings along the first trajectory and the second trajectory as starting points, in which
   an irradiation pitch of the laser light on the first trajectory is 9 µm or less, and an irradiation pitch of the laser light on the second trajectory is smaller than the irradiation pitch of the laser light on the first trajectory.
[2] The method for producing a plate-shaped member according to [1], in which
   the base material is made of a glass.
[3] The method for producing a plate-shaped member according to [2], in which
   the base material is made of an alkali glass.
[4] The method for producing a plate-shaped member according to any one of [1] to [3], in which
   the irradiation pitch of the laser light on the first trajectory is 120% or more and 180% or less with respect to a spot diameter of the laser light, and the irradiation pitch of the laser light on the second trajectory is 140% or less with respect to the spot diameter of the laser light.
[5] The method for producing a plate-shaped member according to any one of [1] to [4], in which
   the irradiation pitch of the laser light on the second trajectory is 7 µm or less.
[6] The method for producing a plate-shaped member according to any one of [1] to [5], in which
   the irradiation pitch of the laser light on the second trajectory is 5 µm or more.
[7] The method for producing a plate-shaped member according to any one of [1] to [6], in which
   the curvature radius of the first trajectory is 1,000 mm or more, and the curvature radius of the second trajectory is 2 mm or more and 10 mm or less.
[8] The method for producing a plate-shaped member according to any one of [1] to [6], in which
   the base material has a curved surface shape having a curvature radius of the surface being 10,000 mm or less.
[9] A plate-shaped member having: a first end surface having a curvature radius of 100 mm or more when viewed from a thickness direction; and a second end surface having a curvature radius of less than 100 mm when viewed from the thickness direction and connected to the first end surface, in which
   the first end surface has a plurality of linear damaged portions extending in the thickness direction of the plate-shaped member, formed at a pitch of 9 µm or less, and
   the second end surface has a plurality of linear damaged portions extending in the thickness direction of the plate-shaped member, formed at a pitch smaller than the pitch of the damaged portions of the first end surface.
[10] The plate-shaped member according to [9], in which
   the plate-shaped member is made of a glass.
[11] The plate-shaped member according to [10], in which
   the plate-shaped member has a compressive stress layer on a surface.
[12] The plate-shaped member according to any one of [9] to [11], in which
   the pitch of the damaged portions of the first end surface is 600% or less with respect to a width of the damaged portions of the first end surface, and the pitch of the damaged portions of the second end surface is 450% or less with respect to a width of the damaged portion of the second end surface.
[13] The plate-shaped member according to any one of [9] to [12], in which
   the pitch of the damaged portions of the second end surface is 7 µm or less.
[14] The plate-shaped member according to any one of [9] to [13], in which
   the curvature radius of the first end surface when viewed from the thickness direction is 1,000 mm or more, and the curvature radius of the second end surface when viewed from the thickness direction is 2 mm or more and 10 mm or less.
[15] The plate-shaped member according to any one of [9] to [14], in which
   the plate-shaped member has a curved surface shape having a curvature radius of a surface being 10,000 mm or less.
[16] The plate-shaped member according to any one of [9] to [15], in which
   the plate-shaped member is used as a cover member of an on-vehicle display device.

### EXAMPLES

Hereinafter, the present invention will be specifically described with reference to Examples, but the present invention is not limited thereto. Examples 1 to 4 and Example 7 are Inventive Examples, and Examples 5 and 6 are Comparative Examples.

### (Example 1)

Next, Examples will be described. FIG. 9 is a schematic diagram illustrating a trajectory for cutting out the base material in Examples. In Example 1, a base material having a length of 50 mm, a width of 50 mm, and a thickness of 1.3 mm was prepared. As for the base material, Dragontrail (registered trademark) manufactured by AGC was used.

As illustrated in FIG. 9, in Example 1, a first trajectory T1AX extending in a lateral direction, a first trajectory T1BX extending in a longitudinal direction, and a second trajectory T2X serving as an R portion connecting the first trajectory T1AX and the second trajectory T1BX were set as trajectories of irradiating the surface of the base material with laser light such that the plate-shaped member cut out from the base material was a longitudinal length LX of 30 mm, a lateral width WX of 30 mm, and a curvature radius RX of the R portion of 3 mm. That is, the first trajectories T1AX and T1BX were linear, and the second trajectory T2X was curved having the curvature radius RX of 3 mm.

In Example 1, a plurality of openings were formed along the trajectory set in such a manner by emitting pulsed laser light along the trajectory. The device and irradiation conditions for the pulsed laser light were as followings.
Device: StarPico3 manufactured by Rofin
Irradiation conditions:
   Wavelength: 1064 nm
   Pulse width: < 10 ps
   Output: 35 W
   Frequency: 75 kHz
   Number of bursts: 4
   Spot diameter: 5 µm
   Irradiation pitch on first trajectory: 8 µm
   Irradiation pitch on second trajectory: 5 µm

The base material in which the openings were formed by the irradiation with the laser light under the above conditions was irradiated with a CO₂ laser and was fractured along the trajectory to cut out a plate-shaped member. The irradiation device and irradiation conditions for the CO₂ laser were as follows.
Device: SR15i manufactured by Rofin
Pulse width:20 µs
Pulse period:200 µs
Spot diameter: 3 mm
Scanning speed: 60 mm/s

In Examples 2 to 7 described later, when the base material was not fractured along the trajectory even by the irradiation of the CO₂ laser, a bending load was applied by hand to fracture the base material along the trajectory, thereby cutting out a plate-shaped member.

### (Examples 2 to 7)

In Example 2, a plate-shaped member was obtained in the same method as in Example 1 except that the irradiation pitch of the pulsed laser light on the second trajectory was set to 7 µm.

In Example 3, a plate-shaped member was obtained in the same method as in Example 1 except that the curvature radius RX of the second trajectory T2X was set to 2 mm.

In Example 4, a plate-shaped member was obtained in the same method as in Example 1 except that the irradiation pitches of the pulsed laser light on the first trajectories T1AX and T1BX were set to 9 µm.

In Example 5, a plate-shaped member was obtained in the same method as in Example 1 except that the irradiation pitch of the pulsed laser light on the second trajectory was set to 8 µm.

In Example 6, a plate-shaped member was obtained in the same method as in Example 1 except that the irradiation pitches of the pulsed laser light on the first trajectories T1AX and T1BX were set to 10 µm.

In Example 7, Dragontrail (registered trademark) manufactured by AGC, having a thickness of 2.0 mm, was used as the base material. The base material had a curved shape with a curvature radius of 1,800 mm with a short side direction as a bending axis. A plate-shaped member was cut out from the base material along a trajectory in which the first trajectories T1AX and T1BX were linear and the second trajectory T2X was cured having the curvature radius RX of 10 mm. The irradiation pitch of the pulsed laser light on the first trajectory was set to 7 µm, and the irradiation pitch of the pulsed laser light on the second trajectory was set to 5 µm. The other conditions including the device and irradiation conditions for the pulsed laser light and the device and irradiation conditions for the CO₂ laser were the same as in Example 1.

### (Evaluation)

Table 1 shows evaluation results in each Example.

**[Table 1]**

| | Curvature radius of second trajectory (mm) | Irradiation pitch (µm) | | Evaluation | | |
|---|---|---|---|---|---|---|
| | | First trajectory | Second trajectory | Cutting out method | Maximum crack (µm) | Determination |
| Ex. 1 | 3 | 8 | 5 | CO₂ | 46.2 | A |
| Ex. 2 | 3 | 8 | 7 | CO₂ | 37.1 | A |
| Ex. 3 | 2 | 8 | 5 | hand | 19.9 | B |
| Ex. 4 | 3 | 9 | 5 | hand | 79.8 | B |
| Ex. 5 | 3 | 8 | 8 | CO₂ | 100 | NG |
| Ex. 6 | 3 | 10 | 5 | CO₂ | 526.7 | NG |
| Ex. 7 | 10 | 7 | 5 | hand | 13.0 | B |

The method for cutting out the plate-shaped member in each Example was evaluated based on whether the plate-shaped member could be cut out with the CO₂ laser. As illustrated in Table 1, the cases where the plate-shaped member could be cut out by the CO₂ laser are described as "CO₂", and the cases where the plate-shaped member could not be cut out by the CO₂ laser and was cut out by hand are described as "hand".

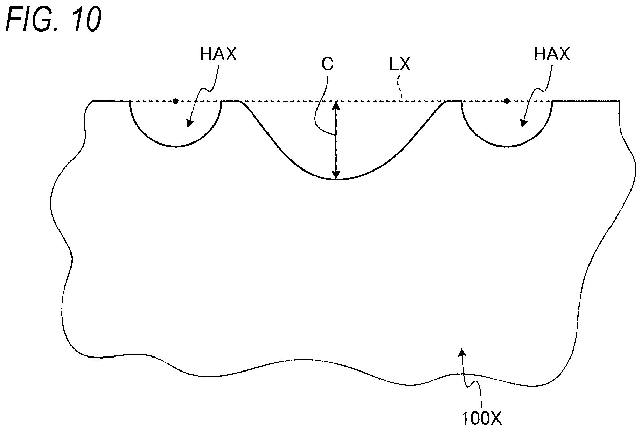

Cracks on an end surface (fracture surface) of the plate-shaped member in each Example were also evaluated. FIG. 10 is a schematic diagram illustrating a method for measuring a crack. As illustrated in FIG. 10, the height C of the crack on the end surface (fracture surface) when viewed from a main surface was measured for the plate-shaped member 100X in each Example.

Specifically, a first end surface (a fracture surface along the first trajectories T1AX and T1BX) and a second end surface (a fracture surface along the second trajectory T2X) were observed by a digital microscope (VHX-6000 manufactured by Keyence Corporation) from a direction perpendicular to the main surface, presence or absence of the crack (chipping) was visually recognized, and in the case where the crack was present, the height C of the crack was measured.

Here, the distance from the line LX connecting the centers of the damaged portions HAX corresponding to the openings formed in the base material to a bottom surface of the crack was measured as the height C. In addition, in the case where there was a portion protruding from the line LX, the portion was also determined as a crack, and the distance between the line LX and a tip of the protruding portion was set as the height C of the crack.

The maximum height C of the first trajectories T1AX and T1BX and the second trajectory T2X was calculated as a maximum crack.

For each Example, the case where the maximum crack was less than 100 µm and the plate-shaped member could be cut out by the CO₂ laser was marked as an evaluation A; the case where the maximum crack was less than 100 µm and the plate-shaped member could not be cut out by the CO₂ laser and could be cut out by hand was marked as an evaluation B; and the case where the maximum crack was more than 100 µm or the plate-shaped member could not be cut out by either the CO₂ laser or the hand was marked as an evaluation NG. The evaluations A and B were regarded as acceptable, and the evaluation NG was regarded as unacceptable.

As illustrated in Table. 1, in Examples 1 to 4, which are Inventive Examples, the irradiation pitch of the first trajectory is set to 9 µm or less and the irradiation pitch of the second trajectory is set smaller than the irradiation pitch of the first trajectory, and the evaluation A or B is obtained, indicating that the occurrence of cracks can be prevented. In Example 7, which is an Inventive Example, even in the case where the base material has a curved surface shape having a curvature radius of 10,000 mm or less, it can be seen that the occurrence of cracks can be prevented under the above conditions.

In contrast, in Example 5, which is a Comparative Example, the irradiation pitch of the second trajectory is not smaller than the irradiation pitch of the first trajectory, and it can be seen that the occurrence of cracks cannot be prevented. In Example 6, which is a Comparative Example, the irradiation pitch of the first trajectory is more than 9 µm, and it can be seen that the occurrence of cracks cannot be prevented.

Although the embodiments of the present invention have been described above, the embodiment is not limited to the contents of these embodiments. In addition, the components described above should include those that can be easily conceived by a person skilled in the art, those that are substantially the same, and those within a so-called equivalent range. Further, the components described above can be appropriately combined. Further, various omissions, substitutions, or modifications of the components can be made without departing from the gist of the embodiments described above. The present application is based on a Japanese patent application (No. 2021-100357) filed on June 16, 2021, and the contents thereof are incorporated herein by reference.

### REFERENCE SIGNS LIST

10: base material
10A, 10B: main surface
100: plate-shaped member
101: first end surface
102: second end surface
H1, H2: opening
HA1, HA2: damaged portion
L: laser light
P1, P2: irradiation pitch
PA1, PA2: pitch
T1: first trajectory
T2: second trajectory

## Claims

1. A method for producing a plate-shaped member comprising:
a step of forming a plurality of openings along a first trajectory on a surface of a base material by irradiating the surface of the base material with a pulse-oscillated laser light along the first trajectory, the first trajectory having a curvature radius of 100 mm or more;
a step of forming a plurality of openings along a second trajectory on the surface of the base material by irradiating the surface of the base material with the laser light along the second trajectory, the second trajectory being continuous with the first trajectory and having a curvature radius of less than 100 mm; and
a step of cutting out a plate-shaped member from the base material by fracturing the base material with the openings along the first trajectory and the second trajectory as starting points, in which
an irradiation pitch of the laser light on the first trajectory is 9 µm or less, and an irradiation pitch of the laser light on the second trajectory is smaller than the irradiation pitch of the laser light on the first trajectory.

2. The method for producing a plate-shaped member according to claim 1, wherein
the base material is made of a glass.

3. The method for producing a plate-shaped member according to claim 2, wherein
the base material is made of an alkali glass.

4. The method for producing a plate-shaped member according to claim 1, wherein
the irradiation pitch of the laser light on the first trajectory is 120% or more and 180% or less with respect to a spot diameter of the laser light, and the irradiation pitch of the laser light on the second trajectory is 140% or less with respect to the spot diameter of the laser light.

5. The method for producing a plate-shaped member according to any one of claims 1 to 4, wherein
the irradiation pitch of the laser light on the second trajectory is 7 µm or less.

6. The method for producing a plate-shaped member according to any one of claims 1 to 4, wherein
the irradiation pitch of the laser light on the second trajectory is 5 µm or more.

7. The method for producing a plate-shaped member according to any one of claims 1 to 4, wherein
the curvature radius of the first trajectory is 1,000 mm or more, and the curvature radius of the second trajectory is 2 mm or more and 10 mm or less.

8. The method for producing a plate-shaped member according to any one of claims 1 to 4, wherein
the base material has a curved surface shape having a curvature radius of the surface being 10,000 mm or less.

9. A plate-shaped member having: a first end surface having a curvature radius of 100 mm or more when viewed from a thickness direction; and a second end surface having a curvature radius of less than 100 mm when viewed from the thickness direction and connected to the first end surface, wherein
the first end surface has a plurality of linear damaged portions extending in the thickness direction of the plate-shaped member, formed at a pitch of 9 µm or less, and
the second end surface has a plurality of linear damaged portions extending in the thickness direction of the plate-shaped member, formed at a pitch smaller than the pitch of the damaged portions of the first end surface.

10. The plate-shaped member according to claim 9, wherein
the plate-shaped member is made of a glass.

11. The plate-shaped member according to claim 10, wherein
the plate-shaped member has a compressive stress layer on a surface.

12. The plate-shaped member according to any one of claims 9 to 11, wherein
the pitch of the damaged portions of the first end surface is 600% or less with respect to a width of the damaged portions of the first end surface, and the pitch of the damaged portions of the second end surface is 450% or less with respect to a width of the damaged portion of the second end surface.

13. The plate-shaped member according to any one of claims 9 to 11, wherein
the pitch of the damaged portions of the second end surface is 7 µm or less.

14. The plate-shaped member according to any one of claims 9 to 11, wherein
the curvature radius of the first end surface when viewed from the thickness direction is 1,000 mm or more, and the curvature radius of the second end surface when viewed from the thickness direction is 2 mm or more and 10 mm or less.

15. The plate-shaped member according to any one of claims 9 to 11, wherein
the plate-shaped member has a curved surface shape having a curvature radius of a surface being 10,000 mm or less.

16. The plate-shaped member according to any one of claims 9 to 11, wherein
the plate-shaped member is used as a cover member of an on-vehicle display device.
